# EUROPEAN PATENT SPECIFICATION

(11) **EP 1 832 913 B1**
(45) Date of publication and mention of the grant of the patent: **23.11.2011**
(21) Application number: 05816814.7
(22) Date of filing: 14.12.2005
(51) Int. Cl.: G02C 7/04, B29C 39/02, B29C 39/26, G02C 13/00

(54) **COMPOSITE CONTACT LENS AND PRODUCTION METHOD FOR SUCH A LENS**
ZUSAMMENGESETZTE KONTAKTLINSE UND DEREN HERSTELLUNGSVERFAHREN
LENTILLE DE CONTACT COMPOSITE ET PROCEDE DE PRODUCTION D'UNE TELLE LENTILLE

(30) Priority: 27.12.2004 JP 2004377017
(43) Date of publication of application: 12.09.2007
(73) Proprietor: HOYA CORPORATION, Shinjuku-ku, Tokyo 161-8525 (JP)
(72) Inventor: SHOJI, Noriyuki, c/o HOYA HEALTHCARE CORPORATION, Shinjuku-ku Tokyo 161-8525 (JP)
(74) Representative: HOFFMANN EITLE
(86) International application number: PCT/JP2005/022923
(87) International publication number: WO 2006/070599

(56) References cited:
- WO-A-94/06621
- GB-A- 1 417 650
- JP-A- 02 124 523
- JP-A- 03 037 620
- JP-A- 04 264 517
- JP-A- 08 505 095
- JP-A- 53 032 266
- JP-A- 62 050 126
- JP-A- 2003 228 029
- US-A- 4 208 362
- US-A- 4 701 288
- US-A1- 2004 212 779

## Description

### Technical field

The present invention relates to a composite contact lens having a central part consisting of a hard material and a peripheral part consisting of a soft material, and a method of manufacturing a lens material for manufacturing the composite contact lens.

Generally, the contact lens is classified broadly into a hard contact lens and a soft contact lens. A hard plastic is used as the material of the hard contact lens, thus having an advantage that optical properties are excellent, and a corneal astigmatism can be corrected. However, a problem involved therein is that a foreign substance feel on wearing is developed, because the material is hard.

Meanwhile, a soft plastic is used as the material of the soft contact lens, and its kind includes the one composed of a hydrous material and the one composed of non-hydrous material.

Most of the soft contact lenses are composed of hydrous materials. The soft contact lens composed of the hydrous material contains water and is soft. Therefore, such a soft contact lens is excellent in wearing feel, compared to the hard contact lens. However, problems involved therein are that optical properties in this case is deteriorated, and a toric shaped lens design is required for having astigmatism correcting capability, thus making a prescription complicated and making it easy to generate unstableness of corrected eyesight due to the unstableness of an astigmatism axis.

In addition, the soft contact lens composed of non-hydrous material has a risk that when a lens does not move during wearing, or even if it moves, only a small movement is allowed despite an excellent wearing feel, lacrimal fluid exchange does not take place, thus causing a damage to cornea. In addition, a large contact lens may sometimes cause oppressive feeling and burning sensation, etc, during wearing.

In order to solve the aforementioned conventional drawbacks of the contact lens composed of a single material, the composite contact lens having the central part consisting of a hare material and the peripheral part consisting of a soft material is proposed. According to this composite contact lens, an excellent wearing feel unique to the soft contact lens and an excellent optical property unique to the hard contact lens can be exhibited. In addition, it is possible to dispose the material having different refractive index in the same optical part. Therefore, such a composite contact lens has a usability as a multifocal contact lens.

Incidentally, Patent document 1 and Patent document 2 propose the composite contact lens using the non-hydrous material in the peripheral part. In this case, after a cutting process of the lens, the peripheral part requires softening by a post-treating such as acid-treating and ester exchange by alcohol. Therefore, a problem of lacking in practicability is posed, because the hard material is limited to a specific one, the steps are increased, and it is difficult to control the softening of the peripheral part.

Accordingly, the hydrous material is used in the peripheral soft material in many cases proposed heretofore. However, a main technical object in this case is how firmly joining the soft material of the peripheral part which is swollen by hydration and the non-hydrous peripheral hard material, namely, how to reduce the damage in a joint part of the peripheral soft part and the central hard part when the lens is formed into a contact lens shape.

In order to achieve this object, a method of polymerizing while changing a composition in a manner of a sloping line from the peripheral part to the central part, so as not to provide a clear joint part (for example, see patent document 3), and a method of polymerizing while melting a frozen body, which is obtained by dipping a member frozen and solidified in a semi-polymer state into a raw material monomer mixed solution forming the other member (for example, see Patent document 4). However, the step is complicated, and the control of polymer is difficult, thus making it impossible to realize practical use thereof.

Further, as is cited in the patent document 5 and the patent document 6, such methods are known as obtaining a composite material by polymerizing the monomer mixed solution for providing a peripheral material in the periphery of a columnar hard part material, and as obtaining the composite material by providing a circular columnar cavity in the peripheral material, then polymerizing in this cavity the monomer mixed solution for providing the central hard part. However, in the composite contact lens after swollen by hydration, obtained by the aforementioned composite materials, when the peripheral part is pulled in a direction along the curvature of the lens from the center to the periphery, or when the peripheral part is pulled in a shear direction from the convex surface to the concave surface of the lens, a certain degree of strength can be exhibited. However, when the peripheral part is pulled in the shear direction from the concave surface to the convex surface of the lens, a breakage is relatively easily generated in the joint part in some cases.

Meanwhile, techniques described in patent document 7 and patent document 8 disclose the method of increasing a joint area by inclining the joint area between the central hard part and the peripheral soft part irrespective of an angle, thereby increasing the strength as a result. However, when the lens is actually handled, such as cleaning and removing from eyes, tensile strength and tear strength in the shear direction from the concave surface to the convex surface is rather important, and when actual handling of the lens is taken into consideration, it is not sufficient to increase the joint area.

Patent document 1: Japanese Patent Laid Open No. 03-92336
Patent document 2: Japanese Patent Laid Open No. 05-72502
Patent document 3: Japanese Patent Laid Open No. 60-49298
Patent document 4: Japanese Patent Laid Open No. 06-89045
Patent document 5: Japanese Patent Laid Open No. 55-29402
Patent document 6: Japanese Patent Laid Open No. 57-6562
Patent document 7: US Patent No. 3973838
Patent document 8: US Patent No. 2004/0046931A1

### DISCLOSURE OF THE INVENTION

### PROBLEM TO BE SOLVED BY THE INVENTION

As described above, in a case of the conventional composite contact lens, although it is possible to make the composite contact lens by having both of a good wearing feel unique to the soft contact lens and an excellent optical property unique to the hard contact lens, the problem of breakage generated on handling the lens is not sufficiently solved, because of the problem on performance of the joint part between the central hard part and the peripheral soft part.

In view of the above-described circumstances, an object of the present invention is to provide the composite contact lens capable of improving the tensile strength and the tear strength in the shear direction from the convex surface to the concave surface or from the concave surface to the convex surface of the lens generated when usually handling the lens, thus improving durability, and a method of manufacturing the lens material for manufacturing the composite contact lens.

### Means to solve the Problem

For example, as is disclosed in patent document 5 and patent document 6, such methods is known as obtaining the composite material by polymerizing the monomer mixed solution for providing the peripheral material in the periphery of the columnar hard part material, and such as obtaining the composite material by providing a columnar cavity in the peripheral part material and polymerizing in this cavity the monomer mixed solution for providing the central hard part. However, in the composite contact lens after swollen by hydration obtained from such composite materials, when the peripheral part is pulled in a direction along the curvature of the lens from the center to the periphery, or when the peripheral part is pulled in a shear direction from the convex surface to the concave surface of the lens, a certain degree of strength can be exhibited. However, when the peripheral part is pulled in the shear direction from the concave surface to the convex surface of the lens, a breakage is relatively easily generated in the joint part in some cases.

An angle formed by the joint surface of the composite contact lens obtained by such composite materials is an acute angle, and for example, when the curvature radius of the concave surface is 8.0mm, with a diameter of a center material set at 8.00mm, the angle is calculated to be 60°. Namely, since this angle is the acute angle, when the peripheral part is pulled in the shear direction from the concave surface to the convex surface of the lens, a crack is easily generated in the joint part, and a directional property appears in the breakage at the joint part.

Meanwhile, the patent document 7 and patent document 8 disclose the method of increasing the joint area by inclining the joint surface between the central hard part and the peripheral soft part irrespective of the angle, thereby increasing the strength as a result. It is true that when the peripheral part is pulled along the direction of the curvature of the lens from the center to the periphery, it is easily estimated that the strength is increased, as the joint area becomes larger. However, when the lens is actually handled, such as cleaning and removing from eyes, tensile strength and tear strength in the shear direction from the concave surface to the convex surface is rather important.

Namely, in a final product, the lens is desired to have not an excessive strength in a particular direction, but a practically sufficient strength in all directions. Conventionally, in a disclosed example of a publication of an unexamined patent publication, an inclined angle of the joint part is not particularly taken into consideration, and an improvement of strength by the increase of the joint area is described. However, as described above, when the inclined angle of the joint surface with respect to the convex surface or the concave surface is not appropriately set, deterioration of strength occurs in some cases. Namely, when actual handling of the lens is taken into consideration, it is not sufficient to increase the joint area, and setting of an appropriate inclined angle of the joint surface is important.

In order to achieve the above-described object, after strenuous efforts and studies, it is found that a joint strength in the shearing direction of the lens cut out in a limited direction, from the composite contact lens material obtained by joining the central hard material and the peripheral soft material so as to have an inclination, is significantly improved compared to that of the lens not having the inclination in the joint surface.

Namely, a breakage strength of the joint part in the shear direction from the concave surface to the convex surface of the composite contact lens cut out so as to have the joint surface inclined in a direction that the diameter of the central hard part in the convex surface of the lens is larger than that in the concave surface, is significantly improved compared to that of the lens not having the inclination in the joint surface. Thus, the present invention as will be described later is completed. Also, by providing an appropriate shaped concentric convex part which is projected forward with respect to a convex surface curve of an optical part, it is found that the joint area can be increased without increasing a thickness of an entire body of the lens, thus making it possible to reduce the breakage at the joint part, forcibly apply a movement to the lens by blinking, and improve safety of cornea and wearing feel. Thus, the present invention as will be described later is completed. The invention is defined in the attached claims.

### Advantage of the Invention

According to the composite contact lens of the present invention, the joint surface between the central hard part and the peripheral soft part is formed of a single conical surface inclined so that the diameter of the hard part in the lens convex surface is larger than the diameter of the hard part in the lens concave surface, and the inclination angle of the conical surface is set so that the angle formed by the joint surface and the lens concave surface is approximately at 90° (obtuse angle in the shear direction from the concave surface to the convex surface). Therefore, even when the peripheral part is pulled in the shear direction from the concave surface to the convex surface of the lens, the crack is hardly generated at the joint surface, and the breakage of the joint part can be effectively prevented. Accordingly, the strength can be increased against the force applied when the lens is actually handled such as cleaning and removing from the eyes, thus improving the durability.

In addition, when the annular convex part is formed, which projects forward with respect to the convex surface curve of the optical part, so as to be concentric with respect to the optical axis of the lens, the movement can be forcibly applied to the lens by a blink during wearing the lens. Further, when particularly the annular convex part is disposed on the joint part between the central hard part and the peripheral soft part, the joint area can be increased without making the thickness of the entire body of the lens larger. Therefore, the breakage at the joint part can be further reduced.

Also, according to the method of manufacturing the lens material of the present invention, the lens material capable of effectively manufacturing the composite contact lens can be manufactured.

### Best Mode for Carrying out the Invention

Preferred embodiments of the present invention will be explained hereafter, with reference to the drawings.

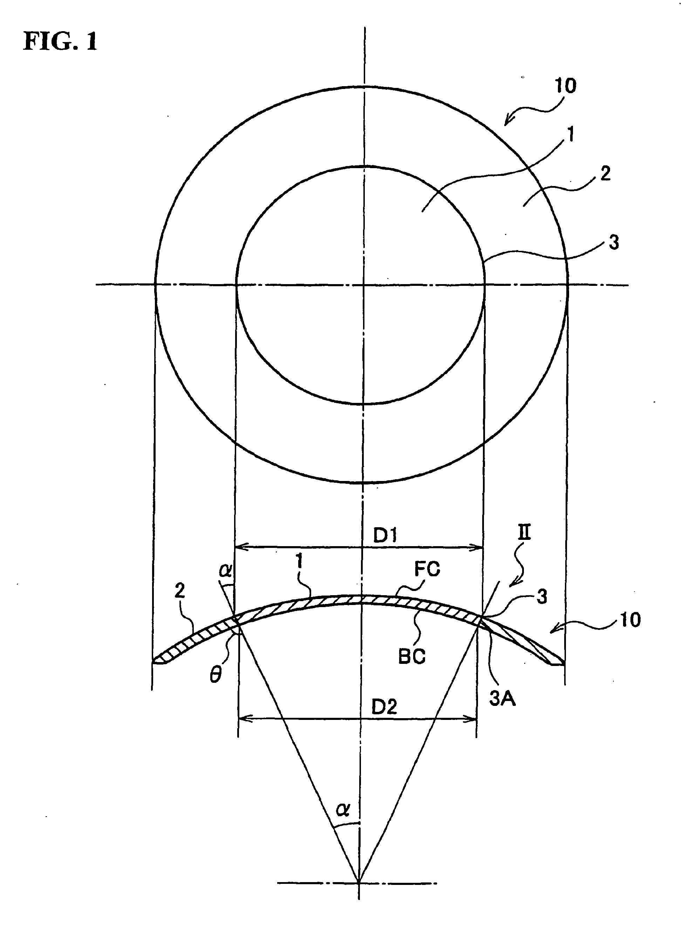

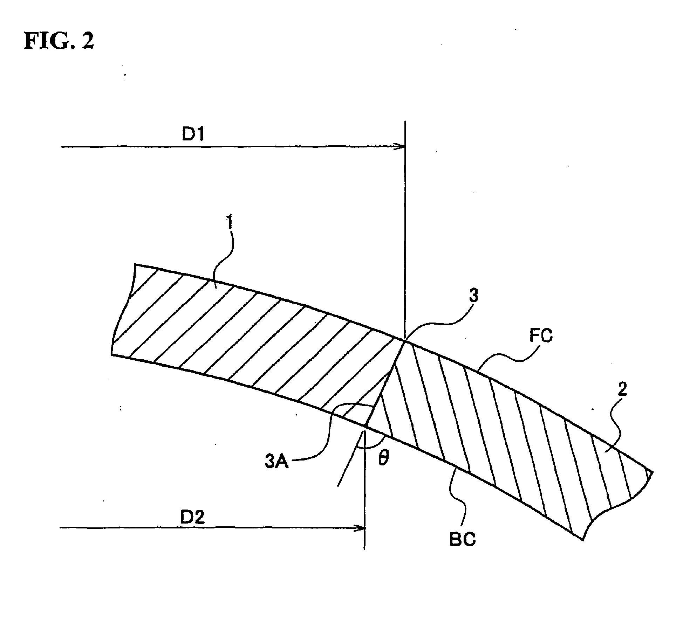

FIG.1 and FIG. 2 are block diagrams of a composite contact lens according to a comparative example.
This composite contact lens 10 is the composite contact lens having a central part consisting of a hard material and a peripheral part consisting of a soft material with hydrous property. A joint surface 3A between a central hard part 1 and a peripheral soft part 2 is formed of a single conical surface inclined so that a diameter D1 of the hard part 1 in the lens convex surface FC is larger than a diameter D2 of the hard part 1 in the lens concave surface BC, and an inclination angle α of the conical surface is set so that an angle θ formed by the joint surface 3A and the lens concave surface BC is approximately at 90°.

By setting the inclination angel α of the conical surface in a range from 15° to 60° of the conical surface as a specific numerical value, the angle formed by the joint surface 3A and the lens concave surface BC, the angle θ formed by the joint surface 3A and the lens concave surface BC is set in a range from 70° to 110°, thus making it possible to expect an increase of a strength. Note that when the inclination angle α of the conical surface is smaller, the effect of reducing the breakage at the joint part 3 of the composite contact lens manufactured from the lens material becomes smaller. Conversely, when the inclination angle α is larger, variation of the diameter of the central part due to a processing error of a position, where the lens is cut out, is easily made larger. In addition, the joint surface may be deliberately roughened to increase the joint area.

In this way, by setting the angle of the joint surface 3A between the central hard part 1 and the peripheral soft part 2, even when the peripheral part is pulled in the shear direction from the concave surface BC to the convex surface FC of the lens, the crack is hardly generated at the joint part 3, thus making it possible to effectively prevent the breakage of the joint part 3. Accordingly, the strength can be increased against the force applied when the lens is actually handled, such as cleaning and removing from the eyes, thus improving the durability.

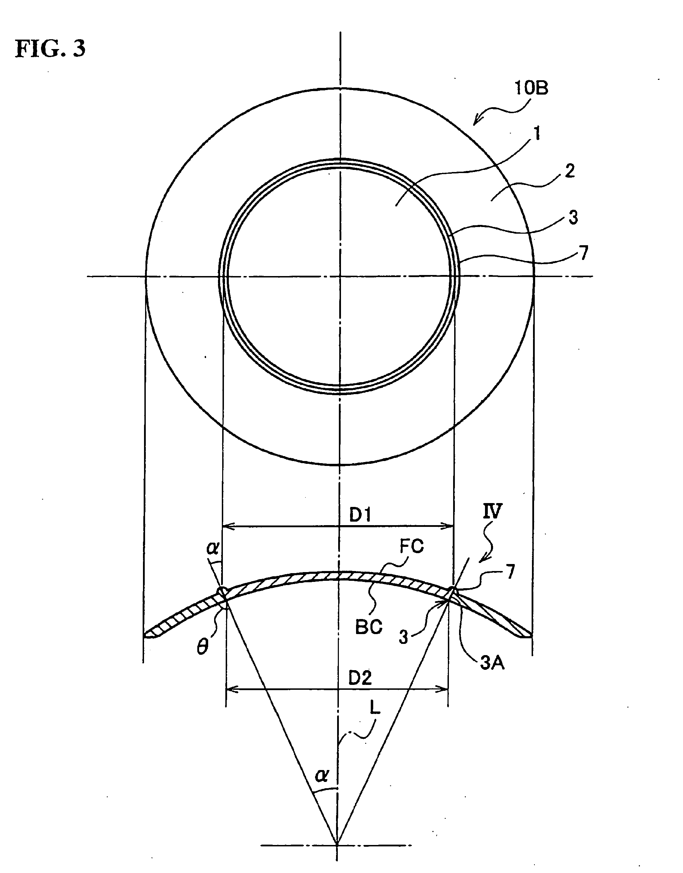

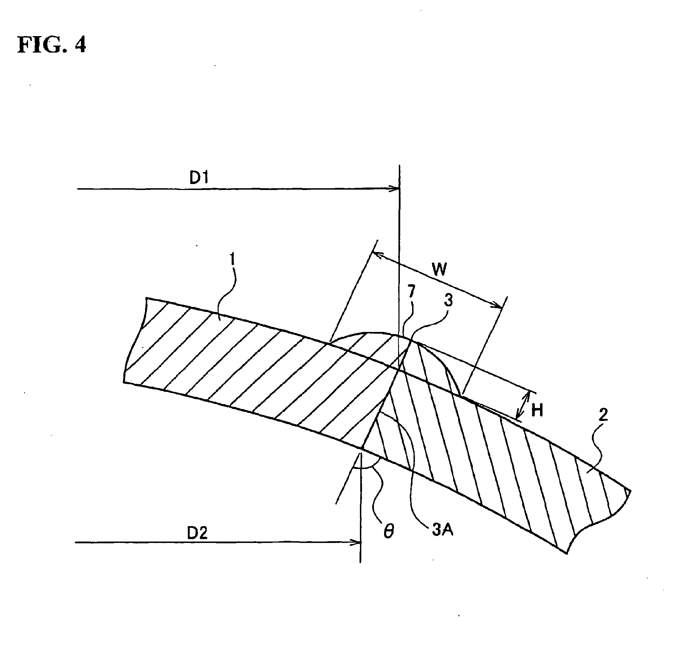

FIG.3 and FIG.4 are block diagrams of the composite contact lens according to a first embodiment.
This composite contact lens 10B has the central part consisting of the hard material and the peripheral part consisting of the soft material with hydrous property. The joint surface 3A between the central hard part 1 and the peripheral soft part 2 is formed of a single conical surface inclined so that the diameter D1 of the hard part 1 in the lens convex surface FC (front curve) is larger than the diameter D2 of the hard part 1 in the lens concave surface BC (base curve), and the inclination angle α of the conical surface is set so that the angle formed by the joint surface 3A and the lens concave surface BC is approximately at 90°, and further an annular convex part 7 is formed, so as to project forward with respect to the convex surface curve of the optical part in an appearance of concentric with respect to an optical axis L of the lens.

In this case, the annular convex part 7 is disposed on the joint part 3 between the central hard part 1 and the peripheral soft part 2, and a height H of the annular convex part 7 is set to be 0.1mm or less with respect to the convex surface curve of the lens of the optical part. In addition, a width W of the contact point of the curve forming the contour of the sectional face of the convex part 7 and the convex surface curve of the lens is set to be 0.04mm or more. This convex part 7 can be processed together with the cutting process of the lens.

Thus, by providing the annular convex part 7 on the lens convex surface FC side, the movement can be forcibly applied to the lens by a blink. In addition, the annular convex part 7 is particularly arranged on the joint part 3 between the central hard part 1 and the peripheral soft part 2. Therefore, without making the entire body of the lens larger, the joint area can be increased, and the breakage at the joint part 3 can be further reduced.

Note that the height H of the convex part 7 is set to be 0.1 mm or less with respect to the convex surface curve of the optical part, but a foreign substance feel on wearing is developed, as the height of the convex part 7 is increased, and when the height of the convex part 7 is insufficient, an advantage of maintaining a continual movement of the lens during wearing is reduced. Accordingly, the height H of the convex part 7 is preferably set to about 0.01 to 0.05 mm with respect to the convex surface curve of the optical part. In addition, the contour of the sectional face of the convex part 7 can be formed in a circular arc with curvature radius of 0.01 to 1 mm having the height of H = 0.1 mm or less with respect to the convex surface curve of the optical part. However, the circular curve forming the convex part 7 and the curve of the lens convex surface FC can be connected to each other by a smoothing curve, spline curve, and the curve using them together.

In addition, a publicly-known lens design can be used in the aforementioned composite contact lenses 10 and 10B. However, in this composite contact lens, a step due to the peripheral part swollen by hydration is generated in the vicinity of the joint part 3, and this frequently affects the movement of the lens. Therefore, a bevel may be provided at the joint part 3 on the lens convex surface BC side.

Next, the method of manufacturing the lens material suitable for manufacturing the aforementioned composite contact lenses 10 and 10B will be explained.

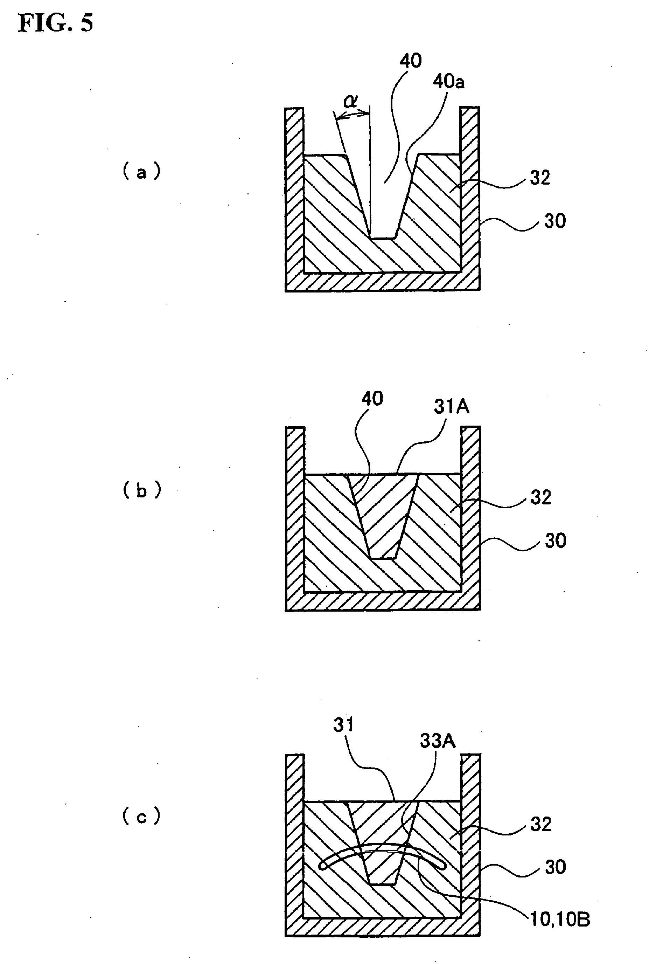

FIG.5 shows the first embodiment of the method of manufacturing the composite contact lens.
According to this method, in the first step, as shown in (a), a taper hole 40 is formed, with a conical surface set as a hole wall surface 40a, in a material 32 for forming the soft part whereby a peripheral soft part 2 of the composite contact lenses 10 and 10B is formed (a method of forming the taper hole 40 will be described later). Next, in the second step, as shown in (b), a raw material monomer mixed solution 31A of the material for forming the hard material whereby a central hard part 1 of the composite contact lenses 10 and 10B is formed, is injected and polymerized in the taper hole 40. Whereby, as shown in (c), the lens material for the composite contact lens having the central part consisting of a hard material 31 and the peripheral part consisting of a soft material 32 can be obtained. According to this method, the monomer having a good affinity with the peripheral soft material 32 out of the kinds of the monomers providing the central hard material 31 is permeated and polymerized into the peripheral soft material 32, and connection of the peripheral soft material 32 and the central hard material 31 is realized. Note that a designation mark 30 indicates a polymerization container used for polymerizing the material 32 for forming the soft part.

From the lens material for the composite contact lens thus obtained, the lens is manufactured by a cutting process at a position becoming a desired central hard part diameter. A method of cutting process usually performed by persons skilled in the art is adopted, and in some cases, by cooling and cutting the lens material, a desired contact lens shape can be realized.

Here, a direction for processing the lens from the lens material is important, and a joint surface 33A between the central part material 31 and the peripheral part material 32 is formed of a single conical surface inclined so that the diameter of the central hard part 1 in the lens convex surface FC is larger than the diameter of the central hard part 1 in the lens concave surface BC (see FIG.1 and FIG.3).

In addition, the composite contact lenses 10 and 10B manufactured by machining may be provided with hydrophilicity on the surface, so as to be adapted to a tear liquid, by a surface treatment such as a plasma treatment by inactive gas, oxygen, and air, etc, as needed, and plasma polymerization.

By dipping a contact lens-shaped molding into water, normal saline, or preservative solution for soft contact lens, the peripheral part is made to contain water, and thus a targeted composite contact lens having the peripheral part consisting of the soft material and the central part consisting of a relatively hard material can be obtained.

Next, several examples are given, for the method of forming the taper hole 40 in the material 32 for forming the soft part, with the conical face as a hole wall face 40a.

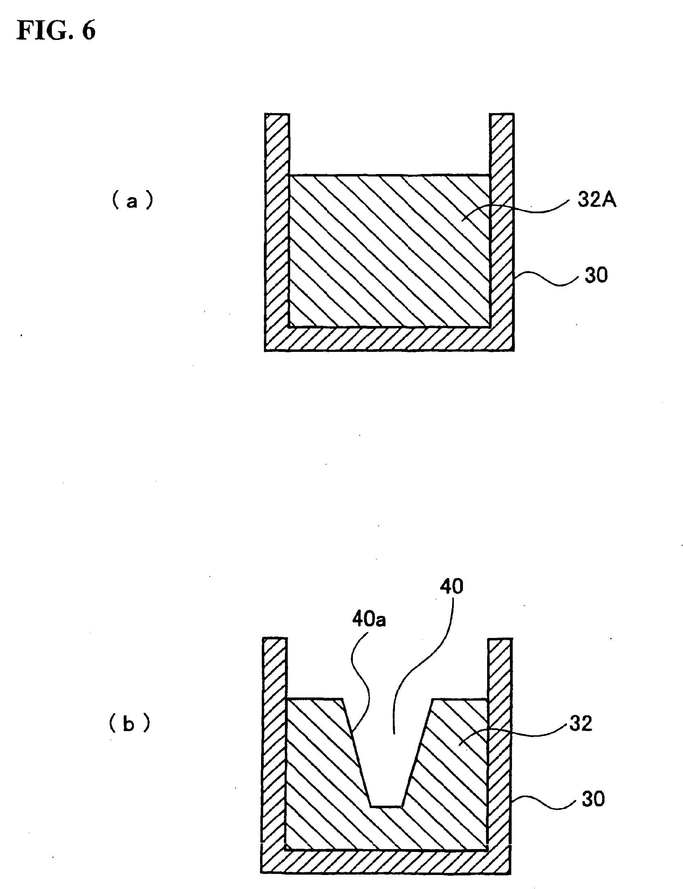

As a first method, as shown in FIG. 6, in the first step, the raw material monomer mixed solution 32A of the material for forming the soft part is injected and polymerized into the polymerization container 30, and the taper hole 40 is formed by a cutting process on the soft material 32 after polymerization.

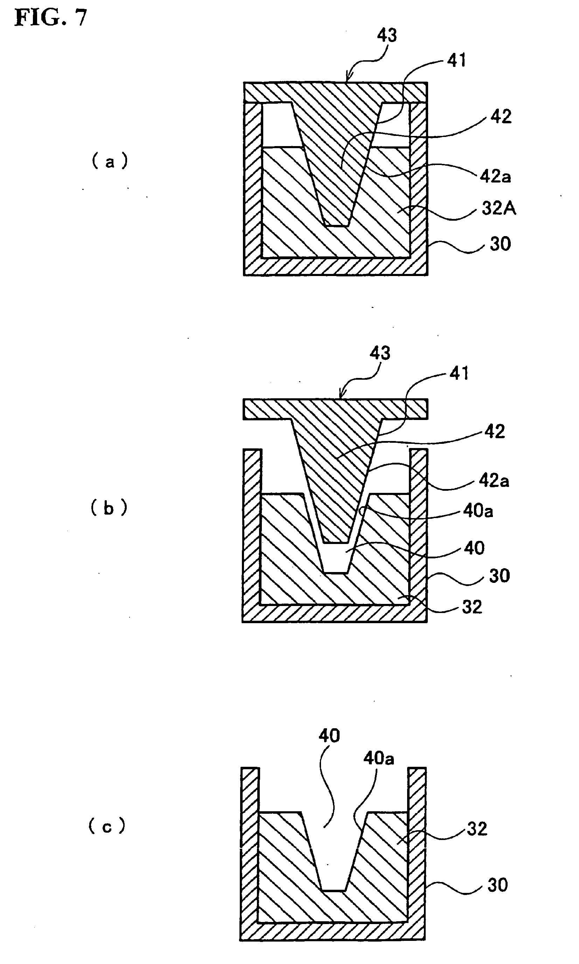

As a second method, as shown in FIG. 7, in the first step, the raw material monomer mixed solution 32A of the material for forming the soft part is injected into the polymerization container 30, and a male mold 41 having a taper projection 42, with the conical face as an outer peripheral face 42a, is arranged in the raw material monomer mixed solution 32A, and in this state, by polymerizing the raw material monomer mixed solution 32A, and removing the male mold 41 after polymerization, the soft material 32 having the taper hole 40 is obtained. In a case of this example as shown in the figure, the male mold 41 is integrally formed with the inner face of a lid 43 for sealing an upper opening part of the polymerization container 30.

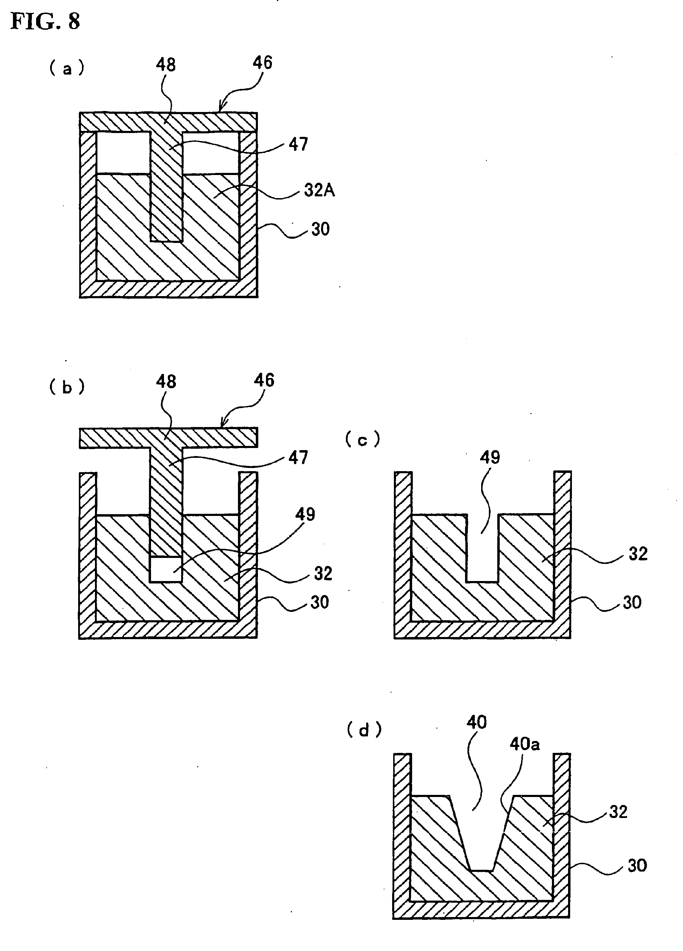

As a third method, as shown in FIG.8, in the first step, the raw material monomer mixed solution 32A of the material for forming the soft part is injected into the polymerization container 30, and a male mold 48 having a projection 47 for forming the pilot hole is disposed in the raw material monomer mixed solution 32A, and in this state, by polymerizing the raw material monomer mixed solution 32A and removing the male mold 48 after polymerization, the soft material 32 having a pilot hole 49 is formed, then by using this pilot hole 48, the taper hole 40 is formed on the soft material 32 by a cutting process. In a case of this example as shown in the figure also, the male mold 48 is integrally formed with the inner face of a lid 46 for sealing the upper opening part of the polymerization container 30.

When the taper hole 40 is formed by the aforementioned second or third method, it is further satisfactory to execute the method by adding the following method.
First, the inner face of the polymerization container 30 is constituted as the molding face having high adhesiveness capable of firmly adhering to the soft material 32 after polymerization. For example, the surface treatment, etc, for improving adhesiveness is applied. At the same time with this surface treatment, the surfaces of the male molds 41 and 48 are constituted as the molding face having low adhesiveness capable of hardly adhering to the soft material 32 after polymerization. Specifically, lids 43 and 46 integrally having the male molds 41 and 48 are manufactured by a polyolefin resin, etc, not adhered to the soft material 32 after polymerization.

In this way, the following advantage can be obtained. Namely, when the upper opening part of the polymerization container 30 is simply sealed by an aluminum seal, etc, as an opposite example, a columnar space (taper hole 40) is formed by machining, and when the central part monomer mixed solution 31A is injected into this space, the shape of the columnar space is deformed due to an internal stress by a shrinkage during polymerization of the peripheral soft material 32, thus making it difficult to make the composite contact lens with estimated shape having the peripheral part consisting of the soft material and the central part consisting of the hard material.
Meanwhile, like the aforementioned example, when polymerization is performed by combining the polymerization container 30 that has undergone the surface treatment for improving adhesiveness, and male molds 41 and 48 (lids 43 and 46) having projections 42 and 47 that have not undergone the surface treatment (constituted to have non-adhesiveness), the peripheral soft material 32 is adhered to the polymerization container 30 side and is not adhered to the projections 42 and 47. This alleviates the internal stress generated by the shrinkage due to polymerization. Therefore, even if the central part monomer mixed solution 31A is injected later, an advantage that the columnar part is not deformed, can be obtained.

In addition, by previously applying the processing to the inner face of the polymerization container 30 made of plastic, whereby the adhesiveness to the soft material 32A is improved, a machining process that follows can be facilitated. Namely, peeling between the lens material polymerized inside and the polymerization container 30 can be prevented, and therefore it becomes possible to machine the lens material together with the polymerization container 30.

Note that as an example of an adhesiveness applying process of the polymerization container 30, a corona discharge treatment and a plasma treatment, etc, in a reduced pressure chamber in the atmosphere, being an electric surface treatment method, can be used. These methods allow little damage to be applied to the polymerization container and are particularly preferable from a viewpoint of different component incorporation into the lens material. Further, the polymerization container 30 is enough to be a form suitable for a succeeding mechanical cutting process, and for example, in order to provide a grip part of a cutting machine, it is preferable to provide a concave/convex part on the side face and a bottom face of the polymerization container, and provide a concave/convex curvature.

In addition, according to the aforementioned method of manufacturing the lens material, the soft material 32 is previously polymerized, and the raw material monomer mixed solution 31A of the hard material is injected and polymerized in the taper hole 40 formed on the soft material 32 later. However, it may be so constituted that the hard material 31 is previously formed, and the soft materials 32 is polymerized in the circumference thereof later.

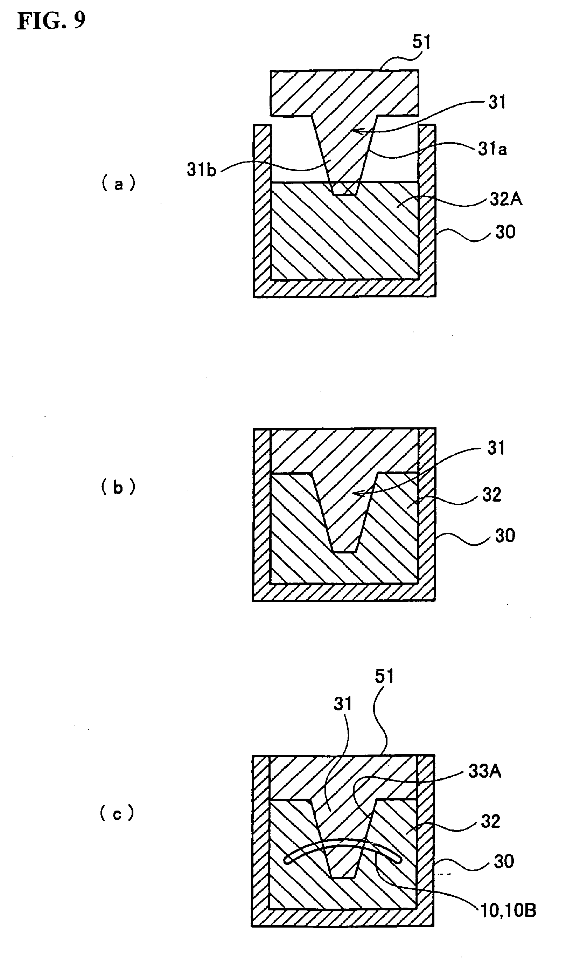

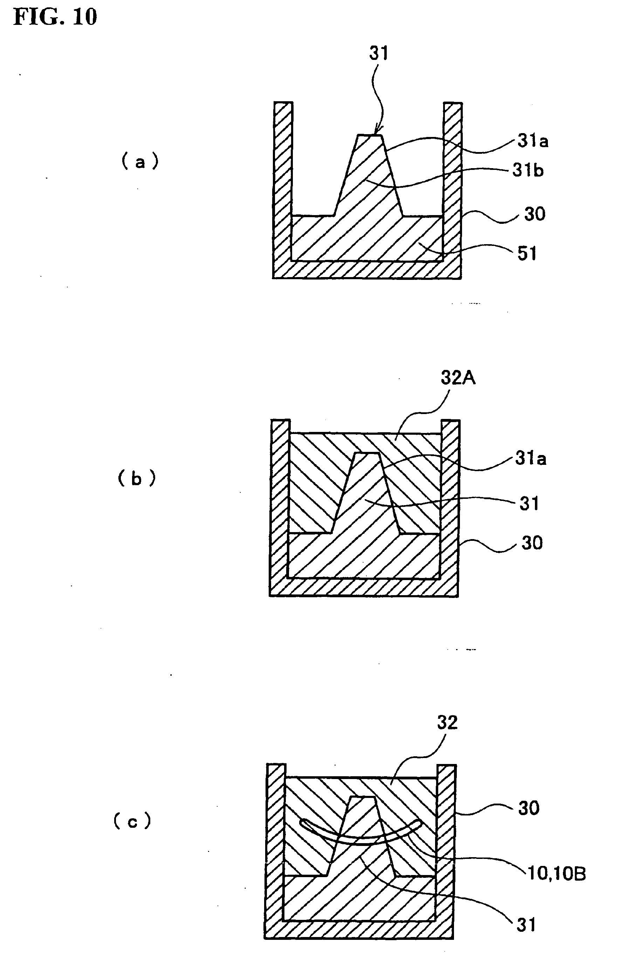

FIG.9 and FIG. 10 show such a method of manufacturing the lens material.
In this method, first, the hard material 31 having a taper projection 31b, with the conical face as an outer peripheral face 31a, is prepared as the material for forming the hard part whereby the central hard part 1 of the composite contact lenses 10 and 10B is formed, and in the circumference of this taper projection 31b, the raw material monomer mixed solution 32A for the material for the soft part, whereby the peripheral soft part 2 of the composite contact lenses 10 and 10B is constituted, is polymerized and made integral with the hard material 31. Thus, the composite contact lens having the central part consisting of the hard material and the peripheral part consisting of the soft material can be obtained.

Specifically, the taper projection 31b made of the hard material 31 is set inside the polymerization container 30, and the monomer mixed solution 32A for providing the peripheral soft material is polymerized in the circumference of this taper projection 31b by an appropriate method. According to this method, the monomer having a good affinity with the peripheral soft material out of the kinds of the monomers providing the peripheral part material is permeated and polymerized into the central part material, and connection of the central part material and the peripheral part material is realized.

An example of FIG. 9 shows a case that the taper projection 31b is integrally formed with a lid 51 for sealing the upper opening part of the polymerization container 30, and if the upper opening part of the polymerization container 30 is closed by the lid 51, the taper projection 31b made of the hard material can be set at a predetermined position. Also, the example of FIG.10 shows a case that the male mold having the taper projection 31b is set in an inner bottom part of the polymerization container 30.

Note that the copolymer of poly-2-hydroxyethyl methacrylate and a publicly-known soft contact lens material, etc, are used in the peripheral part material of the composite material. However, from the viewpoint of the change of the shape after swollen by hydration and the strength, a soft material with low moisture content is preferable after swollen by hydration. In addition, poly-methyl-methacrylte and a publicly-known hard contact lens material having oxygen permeability are used in the central part material.

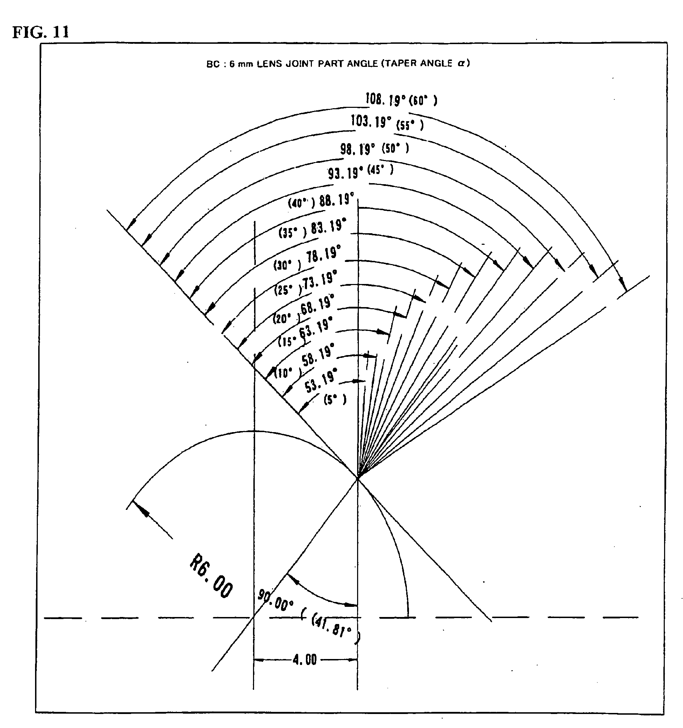

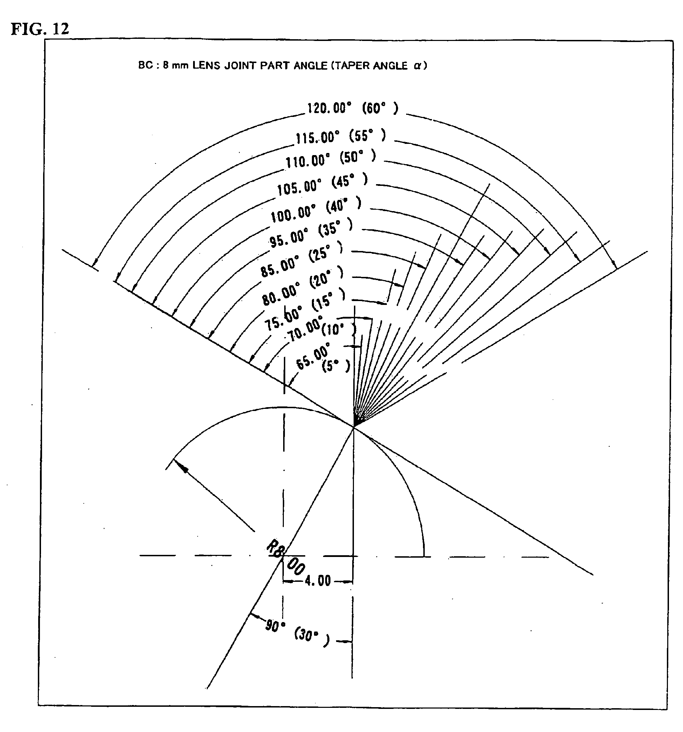

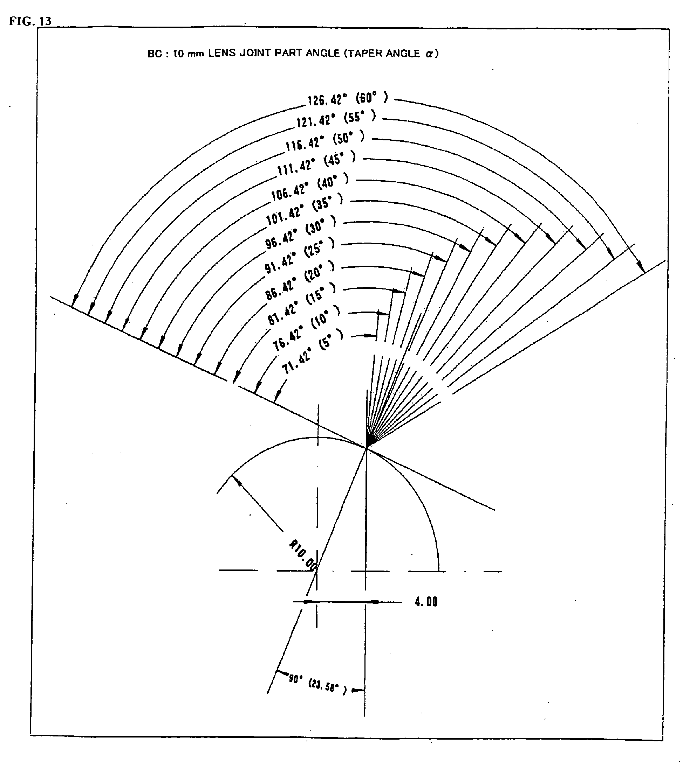

FIG.11 to FIG. 13 show a relation between an angle (taper angle) α of the conical face and an angle θ formed by the joint surface 3A and the lens concave surface BC, in accordance with a difference of the concave surface BC (6mm, 8mm, and 10mm), when a diameter of the central hard part 1 is set at 8.00mm. Table 1 shows this relation by numerical values. From these figure and table, the taper hole 40 for setting the angle θ at approximately 90° and the inclination angle α of the taper projection 31b can be known.

**(Table 1)**

| **Relation between joint surface inclination angle α and lens joint part angle θ formed by each BC, when diameter of central hard part is set at 8.0 mm** | | | | | |
|---|---|---|---|---|---|
| Joint surface inclination angle: α(° ) | BC (mm) | | | | |
| | 6 | 7 | 8 | 9 | 10 |
| 5 | 53.19 | 60.15 | 65 | 68.61 | 71.42 |
| 10 | 58.19 | 65.15 | 70 | 73.61 | 76.42 |
| 15 | 63.19 | 70.15 | 75 | 78.61 | 81.42 |
| 20 | 68.19 | 75.15 | 80 | 83.61 | 86.42 |
| 23.58 | - | - | - | - | 90 |
| 25 | 73.19 | 80.15 | 85 | 88.61 | 91.42 |
| 26.39 | - | - | - | 90 | - |
| 30 | 78.19 | 85.15 | 90 | 93.61 | 96.42 |
| 34.85 | - | 90 | - | - | - |
| 35 | 83.19 | 90.15 | 95 | 98.61 | 101.42 |
| 40 | 88.19 | 95.15 | 100 | 103.61 | 106.42 |
| 41.81 | 90 | - | - | - | - |
| 45 | 93.19 | 100.15 | 105 | 108.61 | 111.42 |
| 50 | 98.19 | 105.15 | 110 | 113.61 | 116.42 |
| 55 | 103.19 | 110.15 | 115 | 118.61 | 121.42 |
| 60 | 108.19 | 115.15 | 120 | 123.61 | 126.42 |

Next, several embodiments and comparative examples will be described. However, the present invention is not limited to these embodiments.

### Embodiment 1

First, 2,2'-azobisisobutyro nitrile is added to the monomer mixed solution by 0.1wt% of monomer mixed solution comprising 44wt% of 2-hydroxyethyl methacrylate, 35wt% of 2-methoxyethyl acrylate, 20wt% of methyl methacrylate, and 1wt% of ethylene glycol dimethacrylate, which is then stirred to dissolve.

Next, the mixed solution thus obtained is injected into a cylindrical polymerization container made of polypropylene with inner diameter of 17 mm, that has undergone plasma treatment under a condition of output: 50W, a degree of vacuum: 0.6 Torr, a reactive gas: and Ar, processing time: 120 seconds, by using "PA-100AT" produced by KYOTO ELECTRONICS MANUFACTURING CO. ,LTD, then after sealing this container, the mixed solution is retained for 48 hours at 40° and 6 hours at 80° in a hot air circulating dryer, thereafter is cooled naturally up to a room temperature and a peripheral part polymer (soft material 32) is obtained.

Next, a columnar cavity (taper hole 40) having an inclination, with a tip made gradually smaller, is formed by a cutting process in the center of this polymer. Note that the inclination of α = 20° is provided to an axis of this cavity. In this cavity is injected the mixed solution obtained by adding 40wt% of tris(trimethylsiloxy)-γ-methacryloxypropylsilan, 45wt% of 2,2,2-trifluoroethyl methacrylate, 10wt% of 2-hydroxyethyl methacrylate, 5wt% of ethylene glycol dimethacrylate, and 0.2wt% of 2,2'- azobisisobutyro nitrile to dissolve therein and the lid is sealed, which is then put in the hot air circulating dryer again, and under the same condition as described above, the monomer mixture in the cavity is polymerized, to obtain the composite material (lens material).

The composite material is not taken out of the polymerization container, and by making a cutting machine grip this polymerization container, the composite material is machined by mechanically cutting by a normal machining technique, so as to obtain a lens with a thickness of 0.15 mm at a position where the central hard part diameter is 8 mm in a direction that the concave surface of the lens to be manufactured becomes the bottom surface side of the composite material. Thereafter, this lens is dipped in the normal saline, and it is found that the lens after sufficiently dipped in the normal saline is the composite contact lens having the central part consisting of the hard material and the peripheral part consisting of the soft material.

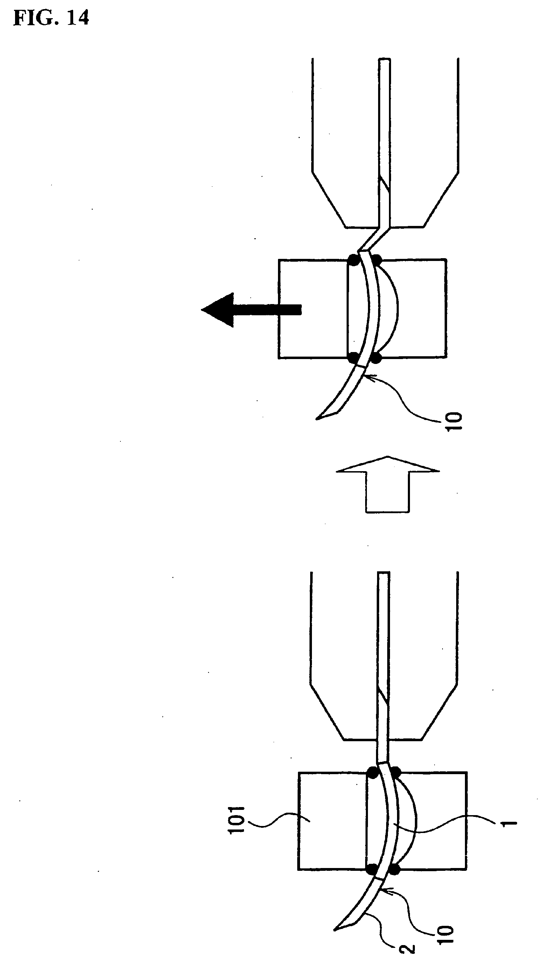

As shown in FIG.14, breaking strength of the joint part of this composite contact lens, with the peripheral part swollen by hydration, is evaluated by the following method using a universal testing machine "MINI44" by INSTRON Corporation. Namely, after clamping and fixing the central hard part 1 with a jig at slightly inside of the joint part, the peripheral soft part 2 is gripped and pulled in the shear direction toward the convex surface of the lens at a speed of 6 mm/min. The breaking load generated here is evaluated as a comparison of a value of a comparative example 1. Parts where the breakage occurs and ratios of generating the damage at the joint part are corresponded and a result is shown in a table 2.

**(Table 2)**

| **JOINT SURFACE INCLINATION ANGLE AND JOINT PART BREAKING LOAD, BREAKING PART, JOINT PART BREAKING RATIO (%)** | | | | |
|---|---|---|---|---|
| **(EACH SAMPLES 7 SAMPLES)** | | | | |
| | **JOINT SURFACE INCLINATION ANGLE INCLINATION ANGLE** | **JOINT PART BREAKING LOAD (N) *1** | **BREAKING PART** | **JOINT PART BREAKING RATIO (%) *2** |
| **EXAMPLE** 1 | 20° | 3.08 | JOINT PART 3, CENTRAL MEMBER 2, PERIPHERAL MEMBER 2 | 43 |
| **EXAMPLE** 2 | 35° | NOT BROKEN AT JOINT PART | PERIPHERAL MEMBER 7 | 0 |
| **EXAMPLE** 3 | 25° | NOT BROKEN AT JOINT PART | PERIPHERAL MEMBER 7 | 0 |
| **EXAMPLE** 4 | 45° | NOT BROKEN AT JOINT PART | PERIPHERAL MEMBER 7 | 0 |
| **COMPARATIVE EXAMPLE 1** | 0° | 1.43 | JOINT PART 6, CENTRAL MEMBER 1 | 86 |
| **COMPARATIVE EXAMPLE 2** | 0° | 2.12 | JOINT PART 3, CENTRAL MEMBER 1, PERIPHERAL MEMBER 1 | 60 |

| | | | | |
|---|---|---|---|---|
| *1: AVERAGE OF BREAKING LOAD AT JOINT PART *2: THE NUMBER OF BREAKAGE AT JOINT PART/THE NUMBER OF SAMPLES BER OF SAMPLES x 100 | | | | |

### Example 2

The composite contact lens is obtained in the same way as the example 1, excluding the point that the inclination angle is changed to α = 35° provided in the cavity of the peripheral part material, and evaluation is made in the same way as the example 1.

### Example 3

2,2'-azobisisobutyro nitrile is added to the monomer mixed solution composed of 46wt% of 2-hydroxyethyl methacrylate, 38wt% of 2-methoxyethyl acrylate, 15wt% of 2,2,2-trifluoroethyl methacrylate, and 1wt% of ethylene glycol dimethacrylate, by 0.1wt% of the monomer mixed solution, which is then stirred to dissolve.

Next, the mixed solution thus obtained is injected into a cylindrical polymerization container made of polypropylene with inner diameter of 17mm, that has undergone corona discharge treatment inside thereof by a ball electrode, with tip end set at 6mm, under a condition of set voltage: 24kV, set output: 51W, processing time: 5 seconds, under atmospheric air, by using "HV-2010" produced by TANTEC Corporation, then after sealing this container, the mixed solution is retained for 42 hours at 42° and 6 hours at 80° in the hot air circulating dryer, thereafter is cooled naturally up to a room temperature and the peripheral part polymer is obtained.

Next, a columnar cavity (taper hole 40) having the inclination, with the tip made gradually smaller, is formed by the cutting process in the center of this polymer (soft material 32). Note that the inclination of α = 20° is provided to the axis of this cavity. In this cavity is injected the mixed solution obtained by adding 40wt% of tris(trimethylsiloxy)-γ-methacryloxypropylsilan, 47wt% of 2,2,2-trifluoroethyl methacrylate, 8wt% of 2-hydroxyethyl methacrylate, 5wt% of ethylene glycol dimethacrylate, and 0.2wt% of 2,2'- azobisisobutyro nitrile to dissolve therein and the lid is sealed, which is then put in the hot air circulating dryer again, and under the same condition as described above, the monomer mixture in the cavity is polymerized, to obtain the composite material (lens material).

The composite material is not taken out of the polymerization container, and by making a cutting machine grip this polymerization container, the composite material is machined by mechanically cutting by a normal machining technique, so as to obtain the lens with a thickness of 0.15 mm at the position where the central hard part diameter is 8 mm in the direction that the concave surface of the lens to be manufactured becomes the bottom surface side of the composite material. Thereafter, this lens is dipped in the normal saline, and it is found that the lens after sufficiently dipped in the normal saline is the composite contact lens having the central part consisting of the hard material and the peripheral part consisting of the soft material. The same evaluation as the embodiment 1 is executed for the composite contact lens, with the peripheral part swollen by hydration.

### Example 4

The composite contact lens is obtained in the same way as the embodiment 1, excluding the point that the inclination angle is changed to α = 45° provided in the cavity of the peripheral part material, and evaluation is made in the same way as the example 1.

### <Comparative example 1>

The composite contact lens is obtained in the same way as the example 1, excluding the point that the columnar cavity, that has undergone the cutting process, is not provided in the center part of the peripheral part material, and the evaluation is made in the same way as the example 1.

### <Comparative example 2>

The composite contact lens is obtained in the same way as the example 3, excluding the point that the inclination is not provided in the columnar cavity, that has undergone the cutting process, in the center part of the peripheral part material, and the evaluation is made in the same way as the example 1.

### Example 5

In the lens of the example 1, a concentric convex part 7 having the following shape is formed on the lens convex surface FC side of the joint part between the central hard material 1 and the peripheral soft material 2.
Height H of the convex part 7 with respect to the convex surface curve of the optical part = 0.04mm
Width W of the contact point of the curve forming the convex part 7 and the convex surface curve of the lens = 0.59mm

The lens thus obtained is actually worn, and the movement on the eyeball and the wearing feel are evaluated.
Its result is shown in table 3.

**(Table 3)**

| **EVALUATION OF MOVEMENT ON EYEBALL AND WEARING FEEL** | | |
|---|---|---|
| | MOVEMENT ON EYEBALL | WEARING FEEL |
| EXAMPLE 5 | ○ | ○ |
| EXAMPLE 6 | ○ | ○ |
| EXAMPLE 7 | ○ | ○ |
| COMPARATIVE EXAMPLE 3 | Δ | ○ |
| COMPARATIVE EXAMPLE 4 | ○ | × |

The movement on the eyeball is confirmed by a slit lamp "SL-7F" by TOPCON Corporation after 1 hour when the lens is worn. The evaluation is shown by ○: good, Δ: slightly bad, x: bad.

### Example 6

In the lens of the example 1, the concentric convex part having the following shape is formed on the convex surface side of the joint part between central hard material and the peripheral soft material.
Height H of the convex part 7 with respect to the convex surface curve of the optical part = 0.04mm
Width W of the contact point of the curve forming the convex part 7 and the convex surface curve of the lens = 0.64mm

### Example 7

In the lens of the example 3, the same concentric convex part as that of the example 5 is formed on the convex surface side of the joint part between the central hard material and the peripheral soft material. The movement on the eyeball and the wearing feel are evaluated in the same way as the example 5.

### <Comparative example 3>

The movement on the eyeball and the wearing feel of the lens of the example 1 not having the convex part on the convex surface side of the lens are evaluated in the same way as the example 5.

### <Comparative example 4>

In the lens of the example 1, the concentric convex part having the following shape is formed on the convex surface side of the joint part between the central hard material and the peripheral soft material.
Height H of the convex part 7 with respect to the convex surface curve of the optical part = 0.12mm
Width W of the contact point of the curve forming the convex part and the convex surface curve of the lens = 1.00mm

Note that table 2 shows the inclination angle of the joint surface, the breaking load of the joint part, breaking part, and breaking ratio of the joint part (%). As shown in the item of the breaking strength, the breaking strength of the joint part between the central hard part and the peripheral soft part is intentionally improved compared to the comparative example, and the damage at the joint part of the composite contact lens having the central part consisting of the hard material and the peripheral part consisting of a hydrous soft material is significantly reduced.

In addition, in a case of the composite contact lens having the central part consisting of the hard material and the peripheral part consisting of the hydrous soft material, the movement on the eyeball during wearing the contact lens is structurally difficult. However, as shown in table 3, by providing the concentric convex part 7 having an appropriate shape on the convex surface side of the lens, the movement of the contact lens during wearing and the wearing feel can be compatible.

Next, as to the aforementioned central hard material (referred to as "center material" hereafter), peripheral soft material (referred to as "peripheral material" hereafter), a cross-linking agent between the centeral material and the peripheral material, the initiator of the centeral material and the peripheral material, and a colorant of the centeral material and the peripheral material, an example that can be adopted will be described.

### <Centeral material>

The silicon-containing alkyl (metha) acrylate of the hard material is used for improving the oxygen permeability of the centeral material, and examples thereof include trimethylsiloxydimethylsilylpropyl(metha)acrylate, bis(trimethylsiloxy)methylsilylpropyl(metha)acrylate, tris(trimethylsiloxy)silylpropyl(metha)acrylate, bis[bis(trimethylsiloxy)methylsiloxanyl]trimethylsiloxysily lpropyl(metha)acrylate, bis(trimethylsiloxy)methylsiloxanylmonopentamethyldi-silox anylmonotrimethylsiloxanylpropyl(metha)acrylate, bis(pentamethyldi-siloxanyl)bis(trimethylsyloxy)methylsilo xanylsilylpropyl(metha)acrylate, etc. Its use amount is preferably in a range of 30 to 60wt%. This is because if the use amount is 30wt% or less, a desired oxygen permeability can not be obtained, and if the use amount is beyond 60wt%, hardness is insufficient, and the centeral material is likely to become fragile. It is particularly preferably set at 35 to 50wt%.

Also, similarly, fluorine-contained alkyl (metha) acrylate is used for improving the oxygen permeability of the centeral material and for applying hardness, and examples thereof include 2,2,2-trifluoroethyl methacrylate, 2,2,2-trifluoroethyl acrylate, 2,2,3,3- tetrafluoropropyl methacrylate, 2,2,3,3-tetrafluoropropyl acrylate, 2,2,3,3,3-pentafluoropropylmethacrylate, 2,2,3,3,3-pentafluoropropylacrylate, 2,2,2-trifluoro-1-trifluoromethylethylmetacrylate, 2,2,2-trifluoro-1-trifluoromethylethylacrylate, 2,2,3,3-tetrafluorofluorotertiaryamylmethacrylate, 2,2,3,3-tetrafluorotertiaryamylacrylate, 2,2,3,4,4,4-hexafluorobutylmethacrylate, 2,2,3,4,4,4-hexafluorotertiaryhexylmethacrylate, 2,2,3,4,4,4-hexafluorotertiaryhexylacrylate, 2,2,3,3,4,4,5,5-octalfluoropentylmethacrylate, 2,2,3,3,4,4,5,5-octalfluoropentylacrylate, etc. Its use amount is preferably in a range of 30 to 60wt%. If the use amount is under 30wt%, desired oxygen permeability and hardness can not be obtained, and regarding the oxygen permeability, the silicon-containing alkyl (metha) acrylate is dominant. Therefore, when the use amount is beyond 60wt%, by decrease of an addition ratio of the silicon-containing alkyl (metha) acrylate, the oxygen permeability is decreased.
It is particularly preferably set in a range of 40 to 55wt%.

2-hydroxyethyl methacrylate has hydrophilic properties, thus giving the hydrophilic properties (wetting properties) to the polymer of silicon-containing alkyl (metha)acrylate and fluorine-contained alkyl (metha) acrylate having hydrophobic properties, and improving affinity and adhesiveness with the peripheral material. Its use amount is preferably in a range of 2 to 15wt%. If it is under 2wt%, desired wetting properties, adhesiveness, and affinity can not be obtained, and depending on a degree of swelling by hydration of the hydrous peripheral material, the breakage occurs to the joint part due to a difference of the degree of swelling between the central material and the peripheral material, and the peripheral part becomes in an appearance of a wall, thus making it impossible to form a lens shape. If it becomes beyond 15wt%, a water absorption is increased to be swollen and softened, thereby reducing the oxygen permeability of the center material, and losing excellent optical properties which can be obtained by its hardness. Therefore, it is particularly preferably set in a range of 5 to 10wt%.

### <Peripheral material>

The hydrous 2-hydroxyethyl methacrylate of the peripheral material has been used for long years as a raw material component of the hydrous soft contact lens, and shows a result of safety. It has hydrophilic properties, and has both of the advantage of swelling and softening by hydration and the advantage of hardening the polymer, and is used in a range of 20 to 60wt%. If the use amount is under 20wt%, the advantage of swelling and softening by hydration can not be sufficiently obtained, and if it is beyond 60wt%, water content after hydration is increased, thus making it difficult to accurately reflect a machining shape on the lens after hydration. For the reason thus described, the use amount is particularly preferably set in a range of 30 to 50wt%.

2-methoxyethyl acrylate gives flexibility to the lens after hydration and has an advantage of hydrophilic properties and suppressing an adhesion of stain components in the tear liquid, and is used in a range of 20 to 60wt%. If the use amount is under 20wt%, a sufficient flexibility after hydration can not be obtained, thereby damaging the wearing feel when the contact lens is used, and if the use amount is beyond 60wt%, the polymer becomes excessively soft, thus making it difficult to be cut. For the reason thus described, the use amount is particularly preferably set in a range of 30 to 50wt%.

Fluorine-contained alkyl (metha) acrylate has an advantage of suppressing the water content after hydration and swelling, and contributes to an adhesion resistance to a lipid, improvement of the oxygen permeability of the peripheral material, the hydrophilic properties with the centeral material, and the adhesiveness, and examples thereof include 2,2,2-trifluoroethyl methacrylate, 2,2,2-trifluoroethyl acrylate, 2,2,3,3- tetrafluoropropyl methacrylate, 2,2,3,3-tetrafluoropropyl acrylate, 2,2,3,3,3-pentafluoropropylmethacrylate, 2,2,3,3,3-pentafluoropropylacrylate, 2,2,2-trifluoro-1-trifluoromethylethylmetacrylate, 2,2,2-trifluoro-1-trifluoromethylethylacrylate, 2,2,3,3-tetrafluorofluorotertiaryamylmethacrylate, 2,2,3,3-tetrafluorotertiaryamylacrylate, 2,2,3,4,4,4-hexafluorobutylmethacrylate, 2,2,3,4,4,4-hexafluorotertiaryhexylmethacrylate, 2,2,3,4,4,4-hexafluorotertiaryhexylacrylate, 2,2,3,3,4,4,5,5-octalfluoropentylmethacrylate, 2,2,3,3,4,4,5,5-octalfluoropentylacrylate, etc. Its use amount is preferably in a range of 5 to 30wt%. If it is under 5wt%, the water absorption is excessively increased, and desired hydrophobic properties with the centeral material and adhesiveness can not be obtained. If it becomes beyond 30wt%, the water content after hydration and swelling is decreased, thus deteriorating flexibility. In addition, in this case, water repellency becomes high, and the surface of the lens is easily dried, thus becoming easy to dim. The use amount is particularly preferably in a range of 10 to 20wt%.

### <Cross-linking agent between the centeral material and the peripheral material>

In the composite contact lens material of the present invention, a cross-linking monomer such as ethylene glycol dimethacrylate, diethylene glycol methacrylate, triethylene glycol dimethacrylate, allyl methacrylate, diallyl methacrylate, diallyl maleate, diallyl isophthalate, and triallyl isocyanurate can be used if desired, in addition to the above-described three components of the central and peripheral materials, to give mechanical strength and durability. Note that the content of the cross-linking monomer relates to physical properties of each material, and when the content of such a cross-linking monomer is excessively increased, the mechanical strength of the central material is apt to deteriorate, the water content of the peripheral material is apt to decrease, and the flexibility is also apt to decrease. In addition, as the composite lens formed of the central and peripheral materials respectively, the content of the cross-linking monomer is preferably set at 15wt% or less in the central material, and 5wt% or less in the peripheral material, out of a total amount of a copolymer composition, in consideration of a deformation or the breakage of the lens due to the difference of the degree of swelling, the hydrophilic properties, and the adhesiveness.

### <Initiator of the central material and the peripheral material>

When manufacturing the central and peripheral materials, first, a polymerization initiator is added to the mixed solution containing the aforementioned monomer, which is then sufficiently stirred to obtain a homogeneous monomer mixed solution, and the polymerization is performed from the central material to the peripheral material, or in its reversed order. The polymerization initiator used at this time includes, for example, peroxide such as lauroyl peroxide, cumene hydroperoxide, benzoyl peroxide, 2,2'-azobis(2,4-dimethylvaleronitrile), and 2,2'-azobisisobutylonitrile when thermal polymerization is employed, and a optical initiator such as benzoin methyl ether, 1-hydroxycyclohexyl phenyl ketone, 2,2-dimethoxy-2-phenylacetophenone, 2-hydroxy-1-phenylpropane-1-on, 2,4,6-trimethylbenzoyldiphenylphosphine oxide, phenylbis(2,4,5-trimethylbenzoyl)-phosphine oxide are used when an photo-polymerization method is employed.

### <Coloring agents of the central material and the peripheral material>

In order to imply an ultraviolet ray absorption ability to each of the obtained central and peripheral materials and color them, a polymerizable ultraviolet absorbent and a polymerizable pigment having excellent elution resistance and toughness can be used, and can be selected and used for each material. Specifically,
5-chloro-2-[2-hydroxy-5-(β-methacryloyloxyethylcarbamoylox yethyl)]phenyl-2H-benzotriazole, 2-(2'hydroxy-3'-tributyl-5'-methylphenyl)-5-(2'methacryloyloxyethyl)benzotria zol are given as examples of the polymerizable ultraviolet ray absorbent.

Specifically, 1,4-bis(4- vinylbenzilamino) anthraquinone, 1-p-hydroxybenzylamino-4-pvinylbenzylamino anthraquinone, 1-anilino-4-methacryloylanthraquinone, etc, are given as examples of the polymerizable pigment.

In addition, when the hydrous peripheral part of the present invention is colored, there is no problem in using a chemical dyeing method in which without using the aforementioned pigments, the hydrous peripheral part is dipped into a chemical dyeing bath by using a dye such as a Vat Blue 6 to sufficiently dip a leuco body of the dye in an overall body of the lens, and thereafter the leuco body is dipped into an oxidizing bath, is changed into a oxidized body, an is fixed. In addition, as other coloring agent for the central and the peripheral materials, a phthalocyanine-based pigment such as an Alcian Blue 8GX, an Alcian Green 2GX, and a Pigment Blue 6 can be used. Although use amounts of the aforementioned polymerizable ultraviolet ray absorbent and the polymerizable pigment depend on a thickness of a lens, usually, they are set at 5wt% or less or preferably 3wt% or less of the copolymer component. When the use amount exceeds 5wt%, a mechanical strength of the obtained contact lens is sometimes deteriorated, and when toxicity of the ultraviolet ray absorbent and the pigment is taken into consideration, this contact lens is likely to be not suitable as a contact lens that directly comes in contact with a living body.

By combining these coloring agent and ultraviolet ray absorbent with the peripheral material and the central material, visibility in handling the contact lens is improved, color of pupil is changed as a fashion, an antiglare effect is exhibited, and an ultraviolet ray preventive effect for cutting harmful ultraviolet ray to human eyes can also be exhibited.

Next, the following typical materials are used as the central material, the peripheral material, and the cross-linking material, and explanation is given to a result of comparing a difference of a performance when composition ratios (weight ratios) of them are changed.

As the central material, the peripheral material, and the cross-linking material, typical examples are used such as:
SiMA: tris(trimethylsiloxy)-γ-methacryloxypropylsilan
FMA: 2,2,2-trifluoroethyl methacrylate
HEMA: 2-hydroxyethyl methacrylate
2-MTA:2- methoxyethylacrylate
Cross linking agent: ethylene glycol dimethacrylate.

The contact lens manufactured by changing a composition ratio is evaluated by the following items,
* Processability
* adhesiveness
* flexibility after swelling by hydration
* lens shape after swelling by hydration,
and good results are shown in table 4 as examples 8 to 12, and bad results are shown in table 5 as comparative examples 5 to 14.

**(Table 4)**

| **COMPARATIVE EXAMPLE OF RELATION BETWEEN CENTRAL MATERIAL AND PERIPHERAL MATERIAL** | | | | | | |
|---|---|---|---|---|---|---|
| | | EXAMPLE 8 | EXAMPLE 9 | EXAMPLE 10 | EXAMPLE 11 | EXAMPLE 12 |
| CENTRAL MATERIAL | SiMA | 40 | 39 | 40 | 40 | 43 |
| | FMA | 50 | 47 | 47 | 45 | 42 |
| | HEMA | 5 | 6 | 8 | 10 | 5 |
| | CROSS LINKING ACENT | 5 | 8 | 5 | 5 | 10 |
| PERIPHERAL MATERIAL | HEMA | 47 | 48 | 47 | 47 | 47 |
| | FMA | 14 | 15 | 14 | 14 | 14 |
| | 2-MTA | 38 | 36 | 38 | 38 | 38 |
| | CROSS LINKING AGENT | 1 | 1 | 1 | 1 | 1 |
| PROCESSABILITY | | ○ | ○ | ○ | ○ | ○ |
| ADHESIVENESS | | ○ | ○ | ○ | ○ | ○ |
| FLEXIBILITY AFTER SWELLING BY HYDRATION | | ○ | ○ | ○ | ○ | ○ |
| LENS SHAPE AFTER SWELLING BY HYDRATION | | ○ | ○ | ○ | ○ | ○ |
| REMARKS | | | | | | |

| | | | | | | |
|---|---|---|---|---|---|---|
| Each material of the central and peripheral materials is typically used: **SiMA :** tris(trimethylsiloxy)-γ-methacryloxypropylsilan **FMA :** 2,2,2-ttitluoroethyl methacrylate **HEMA :** 2-hydroxyethyl methacrylate **2-MTA :** 2-methoxyethyl methacrylate CROSS LINKING ACCENT : ethylene glycol dimethacrylat. | | | | | | |

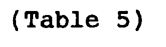

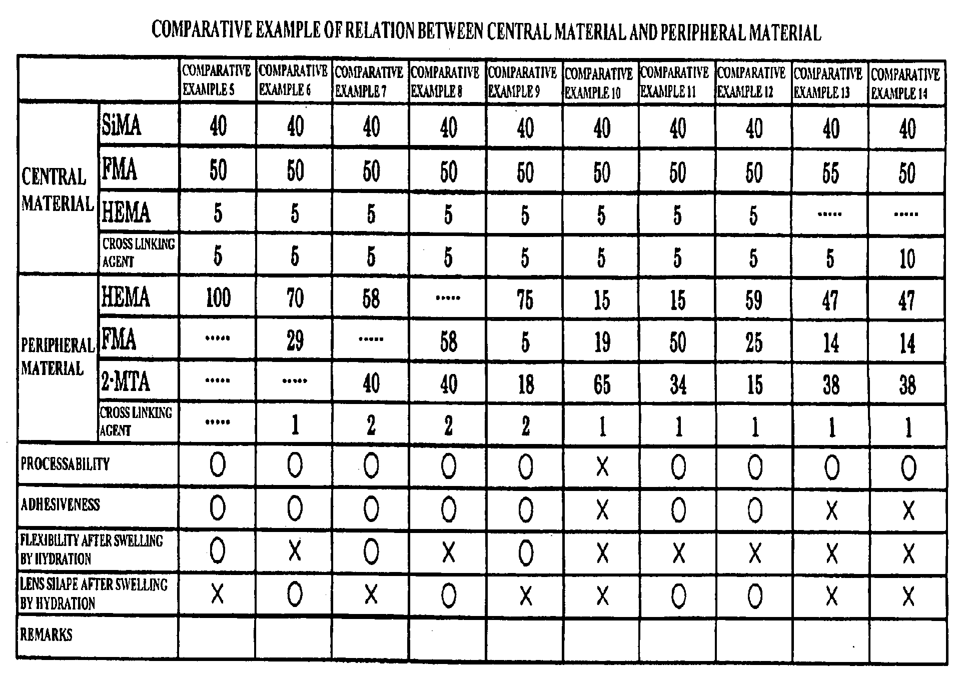

### Brief description of the drawings

FIG. 1 is a front view and a sectional view of a composite contact lens of a composition example.
FIG.2 is an expanded view of a II part of FIG.1.
FIG.3 is a front view and a sectional view showing the composite contact lens of a first embodiment of the present invention.
FIG.4 is an expanded view of a IV part of FIG.3.
FIG.5 is an explanatory view of the first embodiment of a manufacturing method of a lens material of the present invention.
FIG.6 is an explanatory view of a first example of a method of forming a taper hole in the manufacturing method of the lens material of the first embodiment.
FIG.7 is an explanatory view of the second example.
FIG.8 is an explanatory view of the third example.
FIG.9 is an explanatory view of a second embodiment of the manufacturing method of the lens material of the present invention.
FIG. 10 is an explanatory view of other example according to the second embodiment.
FIG.11 is a view showing a relation between an angle (taper angle) α of a conical surface and an angle θ formed by a joint surface 3A and the lens concave surface BC, when a diameter of a central hard part 1 is set at 8.0 mm and a curvature radius of each concave surface BC is set at 6 mm.
FIG.12 is a view showing the same relation when the diameter of the central hard part 1 is set at 8.0 mm and the curvature radius of each concave surface BC is set at 8 mm.
FIG.13 is a view showing the same relation when the diameter of the central hard part 1 is set at 8.0 mm and the curvature radius of each concave surface BC is set at 10 mm.
FIG.14 is an explanatory view of a breakage test.

### Description of Signs and Numerals

- 1: Central hard part
- 2: Peripheral soft part
- 3: Joint part
- 3A: Joint surface
- 7: Convex part
- 10, 10B: Composite contact lens
- BC: Base curve
- FC: Front curve
- 30: Polymerization container
- 31: Hard material
- 31A: Raw material monomer mixed solution of hard material
- 32: Soft material
- 32A: Raw material monomer mixed solution of soft material
- 40: Taper hole
- 40a: Hole wall surface
- 41: Male mold
- 42: Taper projection
- 31a: Outer peripheral surface
- 31b: Taper projection
- 49: Pilot hole

## Claims

1. A lens, which is a composite contact lens (10) having
(A) a central part (1) consisting of a hard material, and
(B) a peripheral part (2) consisting of a soft material with hydrous property;
wherein
(i) a joint surface (3A) between the central part (1) and the peripheral part (2) is formed of a single conical surface inclined so that the diameter of the hard part is larger in the lens convex surface than in the lens concave surface, and the inclination angle (α) of the conical surface is set so that an angle (θ) formed by the joint surface and the lens concave surface is approximately 90°; and
(ii) on the convex surface side of the lens an annular convex part (7) is formed, which
- projects forward with respect to the convex surface curve of an optical part,
- has a concentric shape with respect to the optical axis (L) of the lens, and
- is disposed on a joint part (3) between the central hard part (1) and peripheral soft part (2).

2. The lens of claim 1, wherein the height (H) of the annular convex part (7) is set to be 0.1 mm or less with respect to the convex surface curve of said optical part, and a width (w) of a contact point of a curve forming a contour of a sectional face of said convex part (7) and the convex surface curve of the lens is set to be 0.04 mm or more.

3. The lens of claim 1 or 2, wherein the hard material is composed of a copolymer made of, as essential monomer components,
- 30-60 wt.-% silicon-containing alkyl(meth)acrylate,
- 2-15 wt.-% 2-hydroxyethyl methacrylate, and
- 30-60 wt.-% fluorine-containing alkyl(meth)acrylate.

4. The lens of any of claims 1-3, wherein the soft material with hydrous property is composed of a copolymer made of, as essential monomer components,
- 20-60 wt.-% 2-hydroxyethyl methacrylate,
- 20-60 wt.-% 2-methoxyethyl acrylate, and
- 5-30 wt.-% fluorine-containing alkyl(meth)acrylate.

5. A method of manufacturing the lens of any of claims 1-4, comprising the sequential steps of
(i) forming, in a material (32) for the peripheral soft part (2), a taper hole (40), with the conical surface set as a hole wall surface,; and
(ii) injecting and polymerizing into the taper hole a raw material monomer mixed solution (31A) of a material for the central hard part (1).

6. The method of claim 5, wherein in step (i) a mixed solution of raw material monomers (32A) for the soft part (A) is injected and polymerized into a polymerization container (30), and the taper hole (40) is formed after polymerization by a cutting process.

7. The method of claim 5, wherein in step (i)
- a mixed solution of raw material monomers (32A) for the soft part (i) is injected into a polymerization container (30),
- a male mold (41) having a taper projection (42) with the conical surface (42a) as an outer peripheral surface is arranged in the mixed solution,
- in this state the mixed solution is polymerized, and
- after polymerization the male mold (41) is removed.

8. The method of claim 5 or 6, wherein in step (i)
- a mixed solution of raw material monomers (32A) for the soft part (i) is injected into a polymerization container (30),
- a male mold (48) having a projection (47) for forming a pilot hole (49) is arranged in the mixed solution,
- in this state the mixed solution is polymerized,
- after polymerization the male mold (48) is removed, and
- using the pilot hole (49) in the obtained material for the peripheral soft part (2) the taper hole is formed by a cutting process.

9. The method of claim 7 or 8, wherein the male mold (41,48) is integrally formed with an inner face of a lid (43,46) for sealing an opening part of the polymerization container (30).

10. The method of any of claims 5-9, wherein the inner face of the polymerization container (30) has high adhesiveness and firmly adheres to the soft material after polymerization, and at least the surface of the projection of the male mold (41,48) has low adhesiveness and hardly adheres to the soft material after polymerization.

11. A method of manufacturing the lens of any of claims 1-4, wherein the hard material constituting the central part (1) has a taper projection (31b) with the conical surface (31a) as the outer peripheral surface, and in a circumference of the taper projection the soft part is constituted by polymerizing a mixed solution of raw material monomers (32A) for the soft part (2) to be integral with the hard material.

## Patentansprüche

1. Linse, die eine zusammengesetzte Kontaktlinse (10) ist, die
(A) einen zentralen Teil (1), der aus einem harten Material besteht, und
(B) einen peripheren Teil (2), der aus einem weichen Material mit wässriger Eigenschaft besteht;
aufweist; worin
(i) eine Verbindungsfläche (3A) zwischen dem zentralen Teil (1) und dem peripheren Teil (2) aus einer einzigen konischen Oberfläche gebildet wird, die geneigt ist, so dass der Durchmesser des harten Teils in der konvexen Oberfläche der Linse größer ist als der in der konkaven Oberfläche der Linse, und der Neigungswinkel (α) der konischen Oberfläche so eingestellt ist, dass ein Winkel (θ), der von der Verbindungsfläche und der konkaven Oberfläche der Linse gebildet wird, näherungsweise 90° ist; und
(ii) auf der konvexen Oberflächenseite der Linse ein ringförmiger konvexer Teil (7) gebildet wird, der
- in Bezug auf die konvexe Oberflächenkurve eines optischen Teils nach vorne herausragt,
- eine konzentrische Form in Bezug auf die optische Achse (L) der Linse hat, und
- auf einem Verbindungsteil (3) zwischen den zentralen harten Teil (1) und dem peripheren weichen Teil (2) angeordnet ist.

2. Linse gemäß Anspruch 1, worin die Höhe (H) des ringförmigen konvexen Teils (7) auf 0,1 mm oder weniger in Bezug auf die konvexe Oberfläche des optischen Teils eingestellt ist, und eine Breite (W) eines Kontaktpunktes einer Kurve, die eine Kontur der Querschnittsfläche des konvexen Teils (7) bildet, und der konvexen Oberflächenkurve der Linse auf 0,04 mm oder mehr eingestellt ist.

3. Linse gemäß Anspruch 1 oder 2, worin das harte Material aus einem Copolymer aufgebaut ist, das aus
- 30 bis 60 Gew.-% Silizium enthaltendes Alkyl(meth)acrylat,
- 2 bis 15 Gew.-% 2-Hydroxyethylmethacrylat und
- 30 bis 60 Gew.-% fluorhaltiges Alkyl(meth)acrylat
als wesentliche Monomerkomponenten hergestellt ist.

4. Linse gemäß irgendwelchen der Ansprüche 1 bis 3, worin das weiche Material mit wässriger Eigenschaft aus einem Copolymer aufgebaut ist, das aus
- 20 bis 60 Gew.-% 2-Hydroxyethylmethacrylat,
- 20 bis 60 Gew.-% 2-Methoxyethylacrylat, und
- 5 bis 30 Gew.-% Fluor enthaltendes Alkyl(meth)acrylat
als wesentliche Monomerkomponenten hergestellt ist.

5. Verfahren zur Herstellung der Linse gemäß irgendwelchen der Ansprüche 1 bis 4, das die aufeinanderfolgenden Schritte des
(i) Bildens eines sich verjüngenden Hohlraumes (40), in einem Material (32) für den peripheren weichen Teil (2), wobei die konische Oberfläche als Oberfläche der Hohlraumwand eingestellt ist; und
(ii) Injizieren und Polymerisieren einer gemischten Rohmaterial-Monomer-Lösung (31A) eines Materials für den zentralen harten Teil (1) in den sich verjüngenden Hohlraum.

6. Verfahren gemäß Anspruch 5, worin in Schritt (i) eine gemischte Lösung von Rohmaterialmonomeren (32A) für den weichen Teil (A) in einen Polymerisationsbehälter (30) injiziert und polymerisiert wird, und der sich verjüngende Hohlraum nach der Polymerisation durch ein Schneideverfahren gebildet wird.

7. Verfahren gemäß Anspruch 5, worin in Schritt (i)
- eine gemischte Lösung von Rohmaterialmonomeren (32A) für den weichen Teil (i) in einen Polymerisationsbehälter (30) injiziert wird,
- ein männliches Formungswerkzeug (41), das eine sich verjüngende Erhebung (42) mit der konischen Oberfläche (42a) als äußere Umfangsoberfläche aufweist, in der gemischten Lösung platziert wird,
- die gemischte Lösung in diesem Zustand polymerisiert wird, und
- nach der Polymerisation das männliche Formwerkzeug (41) entfernt wird.

8. Verfahren gemäß Anspruch 5 oder 6, worin im Schritt (i)
- eine gemischte Lösung der Rohmaterialmonomere (32A) für den weichen Teil (i) in einen Polymerisationsbehälter (30) injiziert wird,
- ein männliches Formungswerkzeug (48) mit einer Erhebung (47) zum Bilden eines Pilotlochs (49) in der gemischten Lösung platziert wird,
- die gemischte Lösung in diesem Zustand polymerisiert wird,
- nach der Polymerisation das männliche Formungswerkzeug (48) entfernt wird, und
- unter Verwendung des Pilotlochs (49) im erhaltenen Material für den peripheren weichen Teil (2) der sich verjüngende Hohlraum durch ein Schneideverfahren gebildet wird.

9. Verfahren gemäß Anspruch 7 oder 8, worin das männliche Formungswerkzeug (41, 48) mit einer angeschlossenen inneren Seite eines Deckels (43, 46) zum Versiegeln eines Öffnungsteils des Polymerisationsbehälters (30) gebildet ist.

10. Verfahren gemäß irgendwelchen der Ansprüche 5 bis 9, worin die innere Fläche des Polymerisationsbehälters (30) eine hohe Adhäsivität aufweist und fest an dem weichen Material nach der Polymerisation haftet, und zumindest die Oberfläche der Erhebung des männlichen Formungswerkzeugs (41, 48) eine niedrige Adhäsivität aufweist und kaum an dem weichen Material nach der Polymerisation haftet.

11. Verfahren zur Herstellung der Linse gemäß irgendwelchen der Ansprüche 1 bis 4, worin das harte Material, das den zentralen Teil (1) bildet, eine sich verjüngende Erhebung (31b) mit der konischen Oberfläche (31a) als äußere periphere Oberfläche aufweist, und in einem Umfang der sich verjüngenden Erhebung der weiche Teil durch Polymerisieren einer gemischten Lösung der Rohmaterialmonomere (32A) für den weichen Teil (2) gebildet wird, um mit dem harten Material aus einem Stück zu sein.

## Revendications

1. Lentille, qui est une lentille de contact composite (10) ayant
(A) une partie centrale (1) consistant en un matériau dur, et
(B) une partie périphérique (2) consistant en un matériau souple avec une propriété hydrique ;
dans laquelle
(i) une surface de jonction (3A) entre la partie centrale (1) et la partie périphérique (2) est formée d'une surface conique unique inclinée de manière à ce que le diamètre de la partie dure soit plus grand dans la surface convexe de lentille que dans la surface concave de lentille, et l'angle d'inclinaison (α) de la surface conique est fixé de manière à ce qu'un angle (θ) formé par la surface de jonction et la surface concave de lentille soit approximativement 90° ; et
(ii) sur le côté de surface convexe de la lentille, une partie convexe annulaire (7) est formée, qui
- se projette vers l'avant par rapport à la courbe de surface convexe d'une partie optique,
- a une forme concentrique par rapport à l'axe optique (L) de la lentille, et
- est disposée sur une partie de jonction (3) entre la partie centrale dure (1) et la partie périphérique souple (2).

2. Lentille selon la revendication 1, dans laquelle la hauteur (H) de la partie convexe annulaire (7) est fixée de façon à être 0,1 mm ou moins par rapport à la courbe de surface convexe de ladite partie optique, et une largeur (W) d'un point de contact d'une courbe formant un contour d'une face de section de ladite partie convexe (7) et de la courbe de surface convexe de la lentille est fixée de façon à être 0,04 mm ou plus.

3. Lentille selon la revendication 1 ou 2, dans laquelle le matériau dur est composé d'un copolymère constitué de, comme composants monomères essentiels,
- 30 à 60% en poids d'un (méth)acrylate d'alkyle contenant du silicium,
- 2 à 15% en poids de méthacrylate de 2-hydroxyéthyle, et
- 30 à 60% en poids d'un (méth)acrylate d'alkyle contenant du fluor.

4. Lentille selon l'une quelconque des revendications 1 à 3, dans laquelle le matériau souple avec une propriété hydrique est composé d'un copolymère constitué de, comme composants monomères essentiels,
- 20 à 60% en poids de méthacrylate de 2-hydroxyéthyle,
- 20 à 60% en poids d'acrylate de 2-méthoxyéthyle, et
- 5 à 30% en poids d'un (méth)acrylate d'alkyle contenant du fluor.

5. Procédé de fabrication de la lentille selon l'une quelconque des revendications 1 à 4, comprenant les étapes séquentielles de
(i) formation, dans un matériau (32) pour la partie périphérique souple (2), d'un trou conique (40), avec la surface conique fixée comme une surface de paroi de trou ; et
(ii) injection et polymérisation dans le trou conique d'une solution mixte (31A) de monomères matières premières d'un matériau pour la partie centrale dure (1).

6. Procédé selon la revendication 5, dans lequel, à l'étape (i), une solution mixte (32A) de monomères matières premières pour la partie souple (A) est injectée et polymérisée dans un récipient de polymérisation (30), et le trou conique (40) est formé après la polymérisation par un procédé de découpe.

7. Procédé selon la revendication 5, dans lequel, à l'étape (i),
- une solution mixte (32A) de monomères matières premières pour la partie souple (i) est injectée dans un récipient de polymérisation (30),
- un moule mâle (41) ayant une saillie conique (42) avec la surface conique (42a) comme une surface périphérique extérieure est agencé dans la solution mixte,
- dans cet état, la solution mixte est polymérisée, et
- après la polymérisation, le moule mâle (41) est enlevé.

8. Procédé selon la revendication 5 ou 6, dans lequel, à l'étape (i),
- une solution mixte (32A) de monomères matières premières pour la partie souple (i) est injectée dans un récipient de polymérisation (30),
- un moule mâle (48) ayant une saillie (47) pour former un trou pilote (49) est agencé dans la solution mixte,
- dans cet état, la solution mixte est polymérisée,
- après la polymérisation, le moule mâle (48) est enlevé, et
- en utilisant le trou pilote (49) dans le matériau obtenu pour la partie périphérique souple (2), le trou conique est formé par un procédé de découpe.

9. Procédé selon la revendication 7 ou 8, dans lequel le moule mâle (41, 48) est formé de façon intégrale avec une face intérieure d'un couvercle (43, 46) pour fermer de façon étanche une partie d'ouverture du récipient de polymérisation (30).

10. Procédé selon l'une quelconque des revendications 5 à 9, dans lequel la face interne du récipient de polymérisation (30) a une adhésivité élevée et adhère fermement au matériau souple après la polymérisation, et au moins la surface de la saille du moule mâle (41, 48) a une adhésivité faible et adhère à peine au matériau souple après la polymérisation.

11. Procédé de fabrication de la lentille selon l'une quelconque des revendications 1 à 4, dans lequel le matériau dur constituant la partie centrale (1) a une saillie conique (31b) avec la surface conique (31a) comme la surface périphérique extérieure, et dans une circonférence de la projection conique, la partie souple est constituée en polymérisant une solution mixte (32A) de monomères matières premières pour la partie souple (2) de manière à ce qu'elle soit intégrale avec le matériau dur.
